(19) Europäisches Patentamt
European Patent Office
Office européen des brevets

(11) Publication number: 0 356 928 A1

(12) **EUROPEAN PATENT APPLICATION**

(21) Application number: 89115698.6

(22) Date of filing: 25.08.89

(51) Int. Cl.5: H01B 3/30 , H01B 3/46 , H02K 3/30 , H02K 3/40

(30) Priority: 30.08.88 SE 8803026

(43) Date of publication of application: 07.03.90 Bulletin 90/10

(84) Designated Contracting States: AT BE CH DE FR GB IT LI

(71) Applicant: ASEA BROWN BOVERI AB
S-721 83 Västeras(SE)

(72) Inventor: Björklund, Anders
Björnövägen 36 A
S-723 48 Västeras(SV)
Inventor: Hjortsberg, Arne
Solbrundsvägen 54
S-722 43 Västeras(SV)
Inventor: Holmström, Göran
Källhagsgatan 1 L
S-723 36 Västeras(SV)
Inventor: Johansson, Lennart
Smältverksgatan 69
S-724 74 Västeras(SV)
Inventor: Langberg, Lennart
Fornforskargatan 104
S-723 53 Västeras(SV)

(74) Representative: Boecker, Joachim, Dr.-Ing.
Rathenauplatz 2-8
D-6000 Frankfurt a.M. 1(DE)

(54) **Tape- or sheet-formed electrical insulating material.**

(57) Tape- or sheet-formed electrical insulating material (13) in the form of a self-supporting film of an organic polymer containing at least 10 per cent by volume of powdered filler in the form of chromium oxide ($Cr_2O_3$), iron oxide ($Fe_2O_3$) with an intrinsic resistivity of $10^4$-$10^8$ ohm m, metal phthalocyanine, or a mixture of at least two of said substances. The filler in superficially located parts of the film protects the underlying parts of the film against degradation caused by corona. The chromium oxide and metal phthalocyanine preferably have an intrinsic resistivity of $10^4$-$10^8$ ohm m and the filler-containing film preferably has a resistivity in excess of $10^{10}$ ohm m. The insulating material may, inter alia, be used in windings and coils for electrical machines such as for insulation of conductors (15) included in the conductor bundles (21) from each other and for insulation of conductor bundles from machine slot walls.

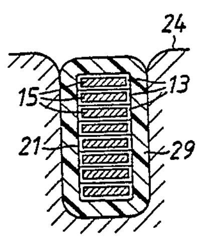


FIG. 3

EP 0 356 928 A1

Xerox Copy Centre

## Tape- or sheet-formed electrical insulating material

The invention relates to a tape- or sheet-formed electrical insulating material according to the precharacterising part of claim 1.

Films of organic polymers generally have a very high electrical strength. However, in many cases their applicability as electrical insulating materials are limited by a high sensitivity to corona (partial or silent) discharges.

The invention aims at developing a tape- or sheet-formed electrical insulating material of the above-mentioned kind which is largely immune against the corona discharges.

To achieve this aim the invention suggests a tape- or sheet-formed electrical insulating material according to the introductory part of claim 1, which is characterized by the features of the characterizing part of claim 1.

Further developments of this insulating material are characterized by the features of the dependent claims 2 to 6.

The invention furthers consists in the application of the afore-mentioned insulating material for insulating coils in electrical machines as specified in the claims 7 to 9.

According to the present invention, it has been found to be possible to protect films of linear organic polymers against corona damage so that they withstand corona for a considerably longer period of time than earlier.

A possible explanation of the favourable results obtained by the present invention may be that the corona "sputters away" insulating polymer material from the surface of the film and that then, when using chromium oxide or iron oxide as filler, superficially exposed chromium oxide or iron oxide, because of its lower electrical resistivity, increases the electrical conductivity locally on the surface of the film. Thus, the extremely concentrated effect of a corona pulse is dissipated over a large surface and hence considerably reduced. Also when using metal phthalocyanine, it is assumed that a corona pulse will spread over a larger surface. Owing to this process in the surface layer of the film, underlying parts of the film are protected against corona damage.

As examples of usable metal phthalocyanines may be mentioned phthalocyanines of copper, iron, nickel, cobalt, magnesium, aluminium, manganese, tin, chromium, and zinc, separately or in a mixture. Particularly preferred, among other things for economical reasons, is copper phthalocyanine, and then particularly $\alpha$-copper phthalocyanine.

The chromium oxide and the metal phthalocyanine, respectively, preferably have an intrinsic resistivity of $10^4$-$10^8$ ohm m.

The filler-containing insulating material preferably has an resistivity in excess of $10^{10}$ ohm m.

The content of the stated filler preferably amounts to 10-40% of the total volume of organic polymer and stated filler in the film.

The thickness of the insulating material suitably amounts to 5-1000 $\mu$m, preferably to 20-200 $\mu$m.

The particle size of the mentioned filler is suitably 0.005-30 $\mu$m and preferably 0.005-5 $\mu$m. When using a particle size of 0.15-10 $\mu$m an especially good flexibility of the film is obtained and the processing of the film is facilitated.

A special advantage of chromium is that it gives the film a corona resistance which is not, or only insignificantly, reduced by the influence of external factors, such as moisture.

A particular advantage of the cyanine is that it gives the film a particularly low loss factor.

The organic polymer in the film preferably consists of polyimide, polycarbonate, polysulfone including polyarylsulfone and polyethersulfone, or polyetherimide, because of the good thermal, mechanical and electrical properties of these polymers; but also other polymers such as, for example, polyamide, polyamideimide, polypropylene and polyethyleneglycol terephthalate may be used.

An electrical insulating material according to the present invention is, inter alia, suitable as insulating material to insulate electrical conductors from each other in conductor bundles of form-wound coils, as well as to insulate conductor bundles from the walls of the slots in a rotor or stator of an electrical machine in which slots the form-wound coils are mounted. For the latter application, primarily phthalocyanines are used because of their low dieletric losses. The electrical insulating material is also well suited for the use as slot insulation between the winding and wall of the machine slot in machines with random wound coils, and as phase insulation between coils for different phases in the latter machines.

The invention will now be explained in greater detail by describing a number of examples with reference to the accompanying drawing showing in

Figure 1 a single electrical conductor which is insulated with an insulating material according to the

present invention,

Figure 2 a side view of a form-wound coil for an electrical machine in which an insulating material according to the invention is used,

Figure 3 the same coil as in Figure 2 in cross section,

Figure 4 in perspective view and in partial section a part of a stator of an electrical machine with random-wound winding, in which an insulating material according to the present invention is used. The powdered filler in the form of chromium oxide ($Cr_2O_3$), iron oxide ($Fe_2O_3$) and copper phthalocyanine used in the examples has an intrinsic resistivity of $10^5$ ohm m.

Example 1

100 parts by weight polycarbonate powder (e.g. Makrolon$^R$ from Bayer AG) are mixed while being stirred with 400 parts by weight methylene chloride. After stirring and careful heating to 30°C, a clear solution is obtained. To this solution are added 87 parts by weight dried chromium oxide ($Cr_2O_3$) with grain size of less than 5 µm and 200 parts by weight glass balls with a diameter of 2 mm. The mixture is poured into a jar with a lid and is treated in a shaking machine for 5 minutes, the chromium oxide particles being dispersed in the solution. The glass balls are filtered off whereupon the green mixture then obtained is poured into a sheet metal vessel with a plane bottom. By careful heating the methylene chloride is driven off (boiling point about 40°C) and an approximately 80 µm thick flexible green film is obtained. It contains 20 per cent by volume of chromium oxide. The chromium oxide-filled film has a resistance to corona which is at least 100 times as great as that of a corresponding polycarbonate film without chromium oxide in a comparative test with the film placed between a Rogowski electrode and a large plane bottom electrode and subjected to an alternating voltage of 3 kV and 500 Hz. Instead of using a sheet metal vessel to manufacture a film of limited size, tapes or sheets of the film in an unlimited length can be produced by pouring the filtered mixture onto an endless conveyor belt having vertical edges. After the solvent has been driven off in a heating device through which the conveyor belt passes, the film formed in the form of a tape or sheet can be lifted off the conveyor belt and be rolled up onto a rolling-up device.

Example 2

100 parts by weight polyethersulfone powder (e.g. UDEL from Union Carbide) are dissolved in the manner described in Example 1 in 500 parts by weight methylene chloride. To the solution are added 105.2 parts by weight chromium oxide ($Cr_2O_3$) with a grain size of less than 5 µm, which gives a content of chromium oxide of 25 per cent by volume in the finished film, which is manufactured in the manner described in Example 1. The chromium oxide-filled 80 µm thick film has a resistance to corona which is at least 100 times that of a corresponding film without chromium oxide when measuring with the method described in Example 1.

Example 3

100 parts by weight of polyetherimide powder (e.g. ULTEM from General Electric) are dissolved in 600 parts by weight methylene chloride in the manner described in Example 1. To the solution are added 18.8 parts by weight copper phthalocyanine with a grain size of 0.07 µm, which gives a content of copper phthalocyanine of 15 per cent by volume in the finished film, which is manufactured in the manner described in Example 1. The 80 µm thick film filled with copper phthalocyanine has a resistance to corona which is at least 100 times that of a corresponding film without chromium oxide when measuring with the method described in Example 1.

Example 4

For manufacturing a filler-containing polyamide film according to the present invention, a two-step method is used.

First polyamic acid

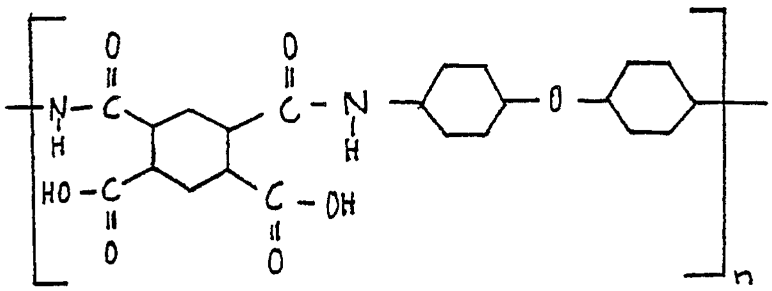

is manufactured from equivalent amounts of diamine

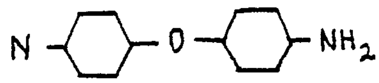

and dianhydride

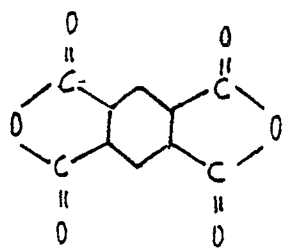

by stepwise polymerization in a suitable solvent such as N,N-dimethyl-acetamide. To the solution with a concentration of 10-15% polyamic acid is added chromium oxide ($Cr_2O_3$) with a particle size of less than 5 µm. The mixture is applied onto a base, for example onto a plate of glass.or onto an endless belt of another material with a fine surface. When the main part of the solvent has been allowed to evaporate at room temperature and the film has become "dry sticky", the film is first heat-treated at 80° C to drive off all solvent and then at 250-300° C in order to separate water from polyamic acid while forming polyimide

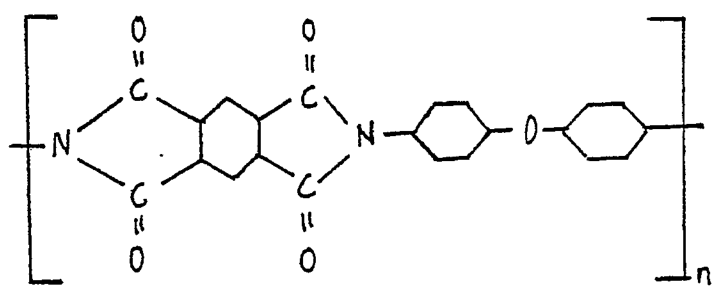

by ring closing. At the same time, the water escapes. The content of chromium oxide constitutes 20% of the total volume of polyimide and chromium oxide. The approximately 90 µm thick film which is filled with chromium oxide withstands breakdowns for a period 1000 times as long as a corresponding film of polyimide without filler both during a test in which several films are arranged on top of each other while forming a stack which is about 420 µm thick and the stack is subjected to a voltage of 5 kV and 1000 Hz, and during testing in which the film (in one layer) is placed in contact with a needle with an applied voltage of 5 kV at 1000 Hz.

## Example 5

A film is manufactured in the manner described in Example 4 but with the difference that iron oxide

($Fe_2O_3$) with a grain size of less than 5 µm is used instead of chromium oxide in the same percentage by volume. The polyimide film filled with iron oxide withstands breakdowns for a period of approximately 750 times as long as a corresponding film of polyimide without a filler.

Example 6

A film is manufactured in the manner described in Example 4 but with the difference that copper phthalocyanine with a grain size of 0.07 µm is used instead of chromium oxide in the same percentage by volume. The polyimide film filled with copper phthalocyanine withstands breakdowns for a period approximately 100 times as long as a corresponding film without a filler.

Example 7

Instead of polyimide used in Example 4-6, a polyimide is used with the composition

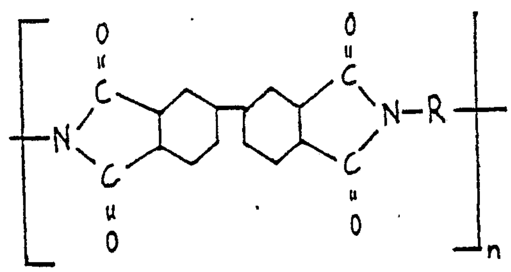

(e.g. UPILEX from UBE Industries Ltd.)

Example 8

Instead of the content of chromium oxide described in Example 4, a content of 30 per cent by volume of chromium oxide is used.

Example 9

Instead of the content of iron oxide described in Example 5, a content of 30 per cent by volume iron oxide is used.

Example 10

Instead of the content of copper phthalocyanine described in Example 6, a content of 30 per cent by volume copper phthalocyanine is used.

Instead of chromium oxide ($Cr_2O_3$), iron oxide ($Fe_2O_3$) and copper phthalocyanine, respectively an equally large percentage by volume of a mixture of two or all of these fillers in arbitrary proportions, for example in equal parts by volume, can be used in the above-exemplified cases. The copper phthalocyanine can be completely or partially re placed by another metal phthalocyanine such as nickel, cobalt or iron phthalocyanine.

A use of the insulating material according to the present invention is shown in Figure 1. A conductor 15 with rectangular cross section of 3 mm x 10 mm is wound with half an overlap with a tape-formed insulating material 13 according to any of Examples 1-10 with a width of 15 mm. On its side facing the conductor 15, the tape is provided with a layer of an adhesive, which layer is thin in relation to the thickness of the tape, for example a layer in the form of a polyamide-modified epoxy resin (such as AF-42 from Minnesota Mining and Manufacturing Company, USA), which has been cured by heating to 160 °C after the wrapping has been applied around the conductor 15. Instead of winding the tape helically, it may be folded about the conductor 15 thereby forming a longitudinal joint.

An insulated conductor according to Figure 1, or a conductor with the tape folded with forming a longitudinal joint, is excellently well suited for use, inter alia, in form-wound coils for electrical machines for operating voltages in excess of 2 kV, for example traction motors, especially with converter operation. In such coils there are normally arranged around the conductor insulation layers of mica to make the conductor insulations resistant to the attack of corona. When using conductors according to the present invention in such coils, it is possible to make the insulation and the corona protection around the conductors considerably thinner than when using the known corona-resistant conductor insulation. In that way more conductor material can be incorporated into the coil thus increasing the filling factor of the machine slots. This means that for a certain machine dimension a greater power can be attained or, respectively, for a certain power, the machine dimensions can be reduced.

A coil as described above comprises a bundle of a plurality of lengths of a conductor of the illustrated kind, arranged side-by-side, and a main insulation, surrounding the conductor bundle, for insulation of the bundle against the machine slot walls.

The conductor bundle may consist of several turns of one single conductor, which have been bent into the final shape of the bundle. It may also consist of several separate insulated conductors, often called strands, which at their ends are electrically connected to one another, usually in parallel. Particularly great advantages are obtained according to the invention for the first-mentioned type of conductor bundle since the stresses between adjacent conductors in this case are greater and a short circuit causes by a damaged conductor insulation is more serious.

The main insulation may be formed in different previously well-known ways. Thus, it may consist of a wrapping of mica tapes or mica sheets. These may be made of mica flakes of conventional kind, which, for example with a varnish binder such as an alkyd resin or a thin thermoplastic resin, are attached to a carrier material of paper, woven glass fibre or the like. The mica materials may also consist of self-supporting tapes or sheets of small mica flakes overlapping each other, which are manufactured by splitting of ordinary mica, these mica materials usually also being attached to a carrier material.

On the above-mentioned mica tapes or sheets, a binder may be applied which later on, when the materials are applied around the conductor bundle, binds the different layers in the conductor insulation to one another. Such a binder may, however, instead be supplied after the insulating material has been applied around the conductor bundle by an impregnation. As examples of suitable binders for the turns of the wrapping may be mentioned solvent-free resins such as epoxy resins and unsaturated polyester resins.

A conductor of the kind described in Figure 1, or a conductor with a folded insulating tape with a longitudinal joint as described above, is bent to form a coil containing a plurality of turns of the conductor lying side by side as shown in Figures 2 and 3, respectively. These turns positioned side-by-side form the conductor bundle 21 of the coil 20. As will be clear from Figure 2, the bending is performed such that the coil 20 has straight parts 22 and 23, intended to be places in a slot 24 of the machine, and bent end parts 25 and 26 which extend outside the slots. The terminals of the coil 20 are designated 27 and 28. To effectively bind adjacently positioned lengths of the insulated conductor to each other, the insulated conductor may be provided with a coating of an adhesive, which coating is thin in relation to the insulation, for example in the form of polyamide-modified epoxy resin (such as AF-42 from Minnesota Mining and Manufacturing Company), preferably containing at least 10 per cent by volume $Cr_2O_3$, $Fe_2O_3$, copper phthalocyanine, with an intrinsic resistivity of $10^4$-$10^8$ ohm m, or at least two of these substances. After the bending of the conductor, the resin is cured by heating to 160 °C.

The conductor bundle 21 is then wound turn-by-turn with, for example, half an overlap with a 25 mm wide mica tape consisting of an 0.09 mm thick self-supporting layer of small mica flakes, overlapping each other, fixed to an 0.04 mm thick woven glass fibre tape with an 0.006 mm thick polyethyleneglycol terephthalate film. Such an insulating tape is described in SE-B-200 820. When the bundle has been provided with a wrapping 29 of, for example twenty layers, located one above the other, of the mica tape, the winding is first dried at a pressure of 0.1 mm Hg and at a temperature of 40 °C, whereupon an impregnating resin is supplied at this pressure. When all impregnating resin has been supplied, the pressure is increased to, for example, 10 kp/cm². The resin may consist of 100 parts by weight of an epoxy resin, which in a known manner is manufactured from epichlorhydrin and 4.4′-dioxyddiphenyl dimethylmethane and which has an epoxy equivalent of 192, and 100 parts by weight of a curing agent consisting of a mixture of 75 parts by weight hexahydrophthalic acid anhydride and 25 parts by weight tetrahydrophthalic acid anhydride. To prevent the resin from penetrating out of the insulation during the subsequent curing operation, the impregnated conductor bundle with the mica tape wrapping may be surrounded by a sealing tape of polytetrafluoro ethylene or the like. The coil is then placed in a forming tool for curing the resinous material. The curing is performed at a temperature of about 160 °C for a period of about 10 hours.

In an alternative embodiment, a coil is manufactured using a mica tape which is impregnated with

impregnating resin prior to its winding around the bundle 21 (Figure 3), which may be of the same kind as in the example above. The resin contains an unsaturated ester resin manufactured of adipic acid (11 mole per cent), phthalic acid anhydride (11 mole per cent), maleic acid anhydride (23 mole per cent) and ethylene glycol (55 mole per cent), and to which are added diallylphthalate in such an amount that the diallylphthalate constitutes 40% of the total weight of ester resin and diallylphthalate as well an benzoyl peroxide in an amount corresponding to 1 % of the weight of the entire resin. The ester resin itself can be manufactured by reaction of a mixture of the acids mentioned and the alcohol in inert atmosphere by increasing the temperature to 220 °C and maintaining this temperature until the acid value of the reaction product is about 30. Prior to the impregnation of the mica tape, 100 parts by weight of the resin are diluted with 100 parts by weight acetone. The mica type, which may be of the same kind as that described above, can be impregnated with the resinous material at room temperature and atmospheric pressure. The impregnated mica tape is wound, after driving off the solvent, around the conductor bundle 21 with half an overlap into thirty layers, located one above the other, to form the main insulation 29. The coil is then placed in a forming tool for curing the resinous material at a temperature of 160 °C for a period of three hours.

Although many unsaturated polyester resins and epoxy resins suited for impregnation of electrical insulations are known, some additional examples of such resins will be mentioned. Thus, there may be used, for example, a polyester resin consisting of 60 parts by weight of a reaction production of 3 moles maleic acid anhydride, 1 mole adipic acid and 4.4 moles ethylene glycol with an acid value of 30, and of 40 parts by weight diallylphthalate and containing 0.75% benzoyl peroxide and a polyester resin consisting of 70 parts by weight of a reaction product of 1 mole fumaric acid, 1 mole phthalic acid, and 2.2 moles propylene glycol with an acid value of 25, and of 30 parts by weight monostyrene and containing 0.5% benzoyl peroxide, as well as an epoxy resin consisting of 100 parts by weight "Epon 828" (Shell Chemical Co.) and 656 parts hexyhydrophthalic acid anhydride, an epoxy resin consisting of 85 parts "Araldit F", 100 parts by weight "Curing Agent 905" (both from Ciba AG, Switzerland) and 15 parts by weight phenylglycidyl ether, an epoxy resin consisting of 100 parts by weight "DER 331" (Dow Chemical Co.) and 65 parts by weight tetrahydrophthalic acid anhydride or 100 parts by weight of epoxy novolak "DEN 438" (Dow Chemical Co.) and 3 parts by weight of the boron trifluoride complex "HZ 935 J 50" (Ciba Geigy AG).

Instead of making the main insulation 29 of a wrapping of mica tapes, the main insulation in the above-described cases can be made of a tape-formed insulating material according to the present invention, preferably according to examples 3, 6 or 10 with copper phthalocyanine or another metal phthalocyanine as filler owing to its low dielectric losses, whereby the insulating material is wound a large number of turns with half an overlap around the conductor bundle 21. Prior to the winding, the tape is supplied with a coating of a resinous binder of any of the kinds exemplified in the above description of the application of a mica tape as main insulation. After the winding, the resin with the wound coils is cured by heating in a forming tool at 150 °C for a sufficient period of time in order for the turns of the tape in the wrapping to be bound to each other and the innermost turn of the tape to the conductor bundle.

If the main insulation, in the manner described above, is made of a tape-formed insulating material according to the present invention, the main insulation can be made thinner than when using mica tapes, and a gain in space is attained. It is also possible to use a main insulation of this kind together with an insulation for the individual conductor of a conventional kind, for example in the form of a wrapping of glass yarn, which has been impregnated with a binder, or of only an enamel layer of such type as is normally used when enamelling winding wire such as terephthalic acid alkyds, polyimides, polyamide imides etc. or together with an insulation of the kind described in the previously filed EP-A-88104398.8, in which the conductor insulation is surrounded by a protective layer consisting of an organic polymer containing powdered chromium oxide and/or iron oxide, or of the kind described in the concurrently filed european patent application entitled "Electrical conductor with a surrounding electrical insulation", in which the conductor insulation consists of an organic polymer containing a powdered filler in the form of chromium oxide, iron oxide and/or metal phthalocyanine such as copper phthalocyanine.

An insulating material according to the present invention is also suited an insulating material in electrical machines with random-wound windings, in which brief steep overvoltages occur such as in machines for frequency convertor operation. The overvoltages may cause high stresses on, inter alia, slot insulations between winding and stator core and on phase insulations between coils for different phases in the winding. Figure 4 illustrates the use of the insulating materials in the electrical machines mentioned. In accordance with this figure, the winding 33 of round enamelled wire 34 is arranged in slots 35 in the stator 36 of the machine. Between coils 37 and 38 for different phases in the same slots, phase insulations 39 are arranged, and around coils in the same slot, slot insulations 40 are arranged. The parts of the winding located outside the stator slots are supported by bands 41 of, for example, woven glass fibre and the parts located in the

stator slots are secured in the slots by wedges 42 of, for example glass fibre-reinforced resin.

The phase insulations 39 and the slot insulations 40 may, inter alia, consist of any of the insulating materials described in examples 1-10 in a width suitable for the use.

## Claims

1. Tape- or sheet-formed electrical insulating material in the form of a self-supporting film of a linear organic polymer, **characterized** in that the film (13) contains powdered filler in the form of chromium oxide ($Cr_2O_3$), iron oxide ($Fe_2O_3$) with an intrinsic resistivity of $10^4$-$10^8$ ohm m, metal phthalocyanine, or a mixture of at least two of said substances in such a content that the amount of the powdered filler constitutes at least 10% of the total volume of the organic polymer and said powdered filler.

2. Electrical insulating material according to claim 1, **characterized** in that the metal phthalocyanine consists of copper phthalocyanine.

3. Electrical insulating material according to claim 1 or 2, **characterized** in that the chromium oxide or metal phthalocyanine has an intrinsic resistivity of $10^4$-$10^8$ ohm m.

4. Electrical insulating material according to any of claims 1-3, **characterized** in that its resistivity is in excess of $10^{10}$ ohm m.

5. Electrical insulating material according to any of the preceding claims, **characterized** in that the content of powdered filler in the form of chromium oxide, iron oxide, metal phthalocyanine or a mixture of at least two of said substances constitutes 10-40% of the total volume of organic polymer and powdered filler.

6. Electrical insulating material according to any of the preceding claims, **characterized** in that the organic polymer consists of polyimide, polycarbonate, polysulfone or polyetherimide.

7. Use of an electrical insulating material according to any of the preceding claims for insulation of parts of a coil (20, 33), which is arranged in the slots (24, 35) of a stator or rotor of an electrical machine and which coil comprises a bundle (31, 37, 38) of a plurality of lengths of a conductor (15, 34), arranged side-by-side, and an insulation (29, 40), surrounding the bundle, which insulates the bundle from the walls of the machine slots.

8. Use of an electrical insulating material according to claim 7, **characterized** in that the electrical insulating material is used for insulating conductor lengths (15, 34) in the bundle (21, 37, 38) from each other.

9. Use of an electrical insulating material according to claim 7 or 8, **characterized** in that the electrical insulating material is used for insulating the bundle (21, 37, 38) from walls of the machine slots (24, 35).

16.08.19
22 167 P

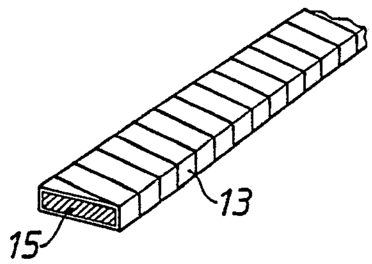


FIG. 1

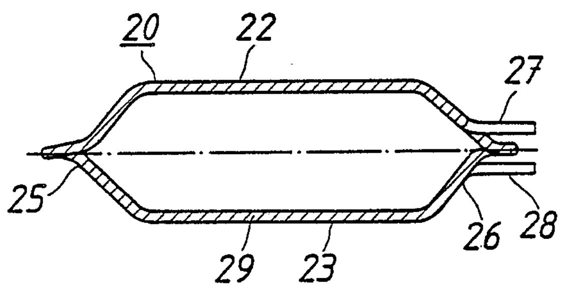


FIG. 2

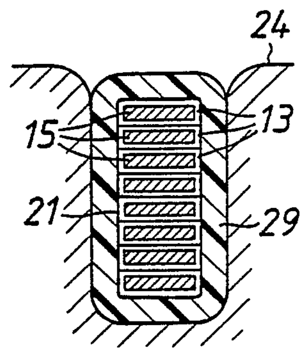


FIG. 3

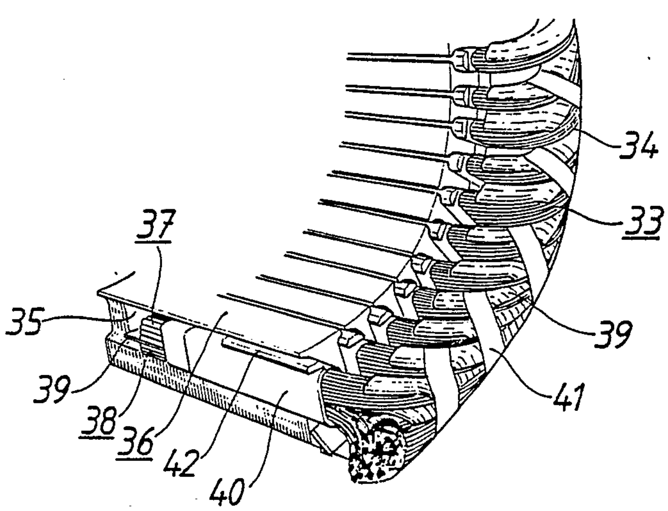


FIG. 4

European Patent Office

# EUROPEAN SEARCH REPORT

Application number
EP 89 11 5698.6

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | SE-A-8504809-8 (ASEA AB) 17 April 1987 *See whole document* --- | 1,3-6 | H 01 B 3/30 - 3/46<br>H 02 K 3/30 - 3/40 |
| A | CHEMICAL ABSTRACTS, vol. 82 (1975), no. 11, 17 March 1975, page 97, left-hand column, no. 59343k, Columbus Ohio (USA); & JP - A - 74 19 694 (NITTO ELECTRIC INDUSTRIAL CO., LTD.) (20-05-1974) *Abstract* --- | 2 | |
| E | SE-B-457 031 (ASEA AB) 21 November 1988 *See whole document* ------ | | **TECHNICAL FIELDS SEARCHED (Int. Cl.4)**<br>H 01 B<br>H 02 K |

The present search report has been drawn up for all claims

| Place of search | Date of completion of the search | Examiner |
|---|---|---|
| STOCKHOLM | 27-11-1989 | FALK I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document